# FASCICULE DE BREVET EUROPEEN

(11) **EP 3 250 874 B1**
(45) Date de publication et mention de la délivrance du brevet: **16.12.2020**
(21) Numéro de dépôt: 16701532.0
(22) Date de dépôt: 26.01.2016
(51) Int. Cl.: F28F 21/06, B60H 1/00, F28D 7/02, F28D 20/02

(54) **BATTERIE THERMIQUE A MATERIAU A CHANGEMENT DE PHASE ENCAPSULE**
WÄRMEBATTERIE MIT VERKAPSELTEM PHASENUMWANDLUNGSMATERIAL
THERMAL BATTERY WITH ENCAPSULATED PHASE-CHANGE MATERIAL

(30) Priorité: 26.01.2015 FR 1550579
(43) Date de publication de la demande: 06.12.2017
(73) Titulaire: Valeo Systèmes Thermiques, 78320 Le Mesnil Saint Denis (FR)
(72) Inventeur: BRY, Samuel, 53260 Parne sur Roc (FR); BOISSELLE, Patrick, 53000 Laval (FR); AZZOUZ, Kamel, 75012 Paris (FR)
(74) Mandataire: Neuviale, Bertrand
(86) Numéro de dépôt international: PCT/EP2016/051593
(87) Numéro de publication internationale: WO 2016/120280

(56) Documents cités:
- EP-A1- 0 044 998
- EP-A2- 0 330 312
- DE-A1- 3 010 850
- DE-A1- 10 242 463
- DE-A1-102013 213 823
- DE-C1- 19 839 994

## Description

La présente invention concerne le domaine de batteries thermiques et plus précisément les batteries thermiques comportant un matériau à changement de phase.

Les batteries thermiques sont généralement utilisées pour le chauffage de l'habitacle, notamment dans des véhicules électriques et hybrides ou alors pour le préchauffage d'un fluide caloporteur dans un circuit de gestion thermique. Les batteries thermiques peuvent également être utilisées pour le préchauffage de l'huile moteur ou de l'huile de boite de transmission automatique de véhicules à moteur à combustion interne.

Une batterie thermique à matériaux à changement de phase comporte généralement une enceinte formant un réservoir à l'intérieur duquel est placé le matériau à changement de phase généralement sous forme encapsulée. Les performances de la batterie thermique sont ainsi dépendantes de la quantité de matériau à changement de phase qu'elle peut contenir couplé avec l'obligation d'une circulation du fluide au sein du réservoir avec des pertes de charges les plus faibles possibles.

Des documents tel que le document DE102013213823 (OPTIMASOL GMBH & CO) et EP0330312 (BALTIMORE AIRCOIL CO INC) proposent des dispositifs selon le préambule de la revendication 1 permettant de palier à certains des inconvénients précités. Toutefois, les propositions de ces documents ne permettent pas une utilisation optimisée du matériau à changement de phase.

Un des buts de la présente invention est donc de remédier au moins partiellement aux inconvénients de l'art antérieur et de proposer une batterie thermique améliorée selon la revendication 1.

La présente invention concerne donc une batterie thermique comportant une enceinte comprenant une entrée et une sortie de fluide et comprenant en son sein un matériau à changement de phase encapsulé sous forme d'au moins un tube, au moins un tube étant enroulé en spirale au sein de l'enceinte.

Le fait d'enrouler en spirale au moins un tube de matériau à changement de phase au sein de l'enceinte permet de maximiser la quantité de matériau à changement de phase au sein de la batterie thermique t ainsi d'améliorer son efficacité puisque cette dernière a une capacité calorifique plus importante.

Selon un aspect de l'invention, l'enroulement en spirale du tube est réalisé autour d'un axe d'enroulement parallèle au flux de circulation du fluide au sein de ladite batterie thermique.

Selon un autre aspect de l'invention, l'enroulement en spirale du tube comporte une partie centrale vide le long de l'axe d'enroulement.

Selon un autre aspect de l'invention, la batterie thermique comporte des tubes longitudinaux de matériau à changement de phase encapsulé, lesdits tubes longitudinaux étant placés dans la partie centrale de l'enroulement en spirale du tube. Les tubes longitudinaux comblent donc la partie centrale de l'enroulement en spirale et ainsi augmentent encore la quantité de matériau à changement de phase contenue au sein de la batterie thermique.

Selon un autre aspect de l'invention, la batterie thermique comporte des entretoises entre les tubes de sorte à ménager un espace de circulation du fluide.

Selon un autre aspect de l'invention, l'enroulement en spirale du tube est réalisé à partir d'un tube unique.

Selon un autre aspect de l'invention, les parois du tube sont réalisées en matière plastique.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective de la disposition des tubes de matériau à changement de phase encapsulé au sein d'une batterie thermique selon un premier mode de réalisation,
- la figure 2 montre une représentation schématique en perspective de la disposition des tubes de matériau à changement de phase encapsulé au sein d'une batterie thermique selon un deuxième mode de réalisation.

Sur les différentes figures, les éléments identiques portent les mêmes numéros de référence.

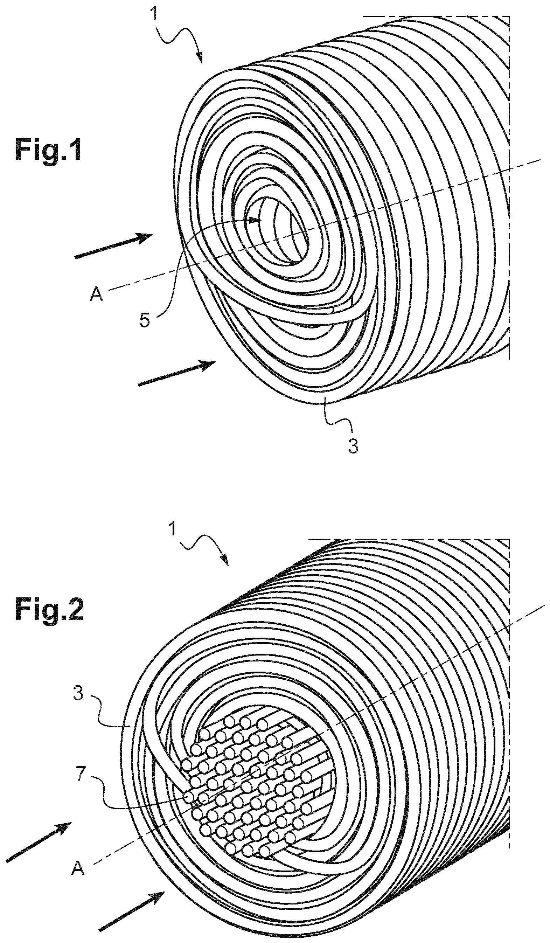

Une batterie thermique 1 comporte généralement une enceinte (non représentée), de préférence isolée thermiquement, comprenant une entrée et une sortie de fluide. A l'intérieure de l'enceinte, est placé un matériau à changement de phase encapsulé sous forme d'au moins un tube 3. Comme le montrent les figures 1 et 2, au moins un des tubes 3 est enroulé en spirale et disposé au sein de l'enceinte.

Le fait d'enrouler en spirale au moins un tube 3 de matériau à changement de phase au sein de l'enceinte permet de maximiser la quantité de matériau à changement de phase au sein de la batterie thermique 1 et ainsi d'améliorer son efficacité puisque cette dernière a une capacité calorifique plus importante.

L'enroulement en spirale de ce tube 3 est réalisé autour d'un axe d'enroulement A qui est parallèle au flux de circulation du fluide (représenté par des flèches sur les figures 1 et 2) au sein de la batterie thermique 3 de sorte que le fluide puisse circuler perpendiculairement à l'enroulement en spirale.

L'enroulement en spirale à l'intérieur de la batterie thermique 1 est de préférence réalisé de préférence à partir d'un tube 3 unique. Cela permet de limiter le nombre extrémités. En effet, à chacune de ses extrémités un tube 3 contenant un matériau à changement de phase comporte une soudure ou un bouchon afin d'encapsuler ledit matériau à changement de phase. Limiter le nombre de tube 3 et donc le nombre de ces extrémités permet de diminuer les risques de fuite du matériau à changement de phase.

Il est cependant tout à fait possible d'imaginer, sans sortir du cadre de l'invention, un enroulement en spirale composé de plusieurs tubes, ou alors un empilement de plusieurs enroulement en spirale au sein de l'enceinte.

Le tube 3 à l'intérieur duquel est encapsulé le matériau à changement de phase est de préférence en matière plastique afin de permettre cet enroulement en spirale.

Du fait du rayon de cintrage limité du tube 3, l'enroulement en spirale comporte une partie centrale 5 vide le long de l'axe d'enroulement A. cette partie centrale peut rester vide afin d'assurer une bonne circulation du fluide comme illustrer à la figure 1. Par exemple, pour un tube 3 en matière plastique telle que le polycarbonate, un rayon de cintrage minimum est de l'ordre de 25mm, sans que ledit tube 3 ne se plie. La partie centrale 5 vide aura alors un diamètre de l'ordre de 50mm.

A contrario, et comme le montre la figure 2, cette partie centrale 5 peut être comblée par des tubes longitudinaux 7 de matériau à changement de phase encapsulé. Ces tubes longitudinaux 7 sont alors placés parallèlement à l'axe d'enroulement A.

Ces tubes longitudinaux 7 comblent donc la partie centrale 5 de l'enroulement en spirale et ainsi augmentent encore la quantité de matériau à changement de phase contenue au sein de la batterie thermique.

Afin que le fluide puisse circuler entre les spires de l'enroule en spirale du tube 3 et entre les tubes longitudinaux 7 avec des pertes de charges limitées, les tubes 3 et 7 peuvent comporter des entretoises de sorte à ménager un espace de circulation du fluides.

Ainsi, on voit bien que la batterie thermique 1 est optimisée du fait de la disposition particulière en spirale d'au moins un tube 3 de matériau à changement de phase qui permet de maximiser la quantité de matériau à changement de phase.

## Revendications

1. Batterie thermique (1) comportant une enceinte comprenant une entrée et une sortie de fluide et comprenant en son sein un matériau à changement de phase encapsulé sous forme d'au moins un tube (3), au moins un tube (3) étant enroulé en spirale au sein de l'enceinte,
**caractérisée en ce que** ledit enroulement en spirale du tube (3) est réalisé autour d'un axe d'enroulement (A) parallèle au flux de circulation du fluide au sein de ladite batterie thermique (1), et comporte une partie centrale (5) le long de l'axe d'enroulement (A), ladite partie centrale (5) comprenant des tubes longitudinaux (7) de matériau à changement de phase encapsulé.

2. Batterie thermique (1) selon la revendication 1, **caractérisée en ce qu'**elle comporte des entretoises entre les tubes (3; 7) de sorte à ménager un espace de circulation du fluide.

3. Batterie thermique (1) selon l'une des revendications 1 ou 2, **caractérisée en ce que** l'enroulement en spirale du tube (3) est réalisé à partir d'un tube (3) unique.

4. Batterie thermique (1) selon l'une des revendications précédentes, **caractérisée en ce que** les parois du tube (3) sont réalisées en matière plastique.

## Patentansprüche

1. Wärmebatterie (1), die ein Gehäuse umfasst, das einen Fluideinlass und einen Fluidauslass beinhaltet und in seinem Inneren ein verkapseltes Phasenumwandlungsmaterial in Form mindestens eines Rohrs (3) beinhaltet, wobei mindestens ein Rohr (3) im Inneren des Gehäuses spiralförmig gewickelt ist,
**dadurch gekennzeichnet, dass** die Spiralwicklung des Rohrs (3) um eine Wicklungsachse (A) ausgebildet ist, die zu dem Fluidströmungsfluss im Inneren der Wärmebatterie (1) parallel ist, und entlang der Wicklungsachse (A) einen zentralen Teil (5) umfasst, wobei der zentrale Teil (5) Längsrohre (7) aus einem verkapselten Phasenumwandlungsmaterial beinhaltet.

2. Wärmebatterie (1) nach Anspruch 1, **dadurch gekennzeichnet, dass** sie Distanzelemente zwischen den Rohren (3; 7) umfasst, um einen Fluidströmungsraum zu bilden.

3. Wärmebatterie (1) nach einem der Ansprüche 1 oder 2, **dadurch gekennzeichnet, dass** die Spiralwicklung des Rohrs (3) aus einem einzigen Rohr (3) hergestellt ist.

4. Wärmebatterie (1) nach einem der vorhergehenden Ansprüche, **dadurch gekennzeichnet, dass** die Wände des Rohrs (3) aus Kunststoff hergestellt sind.

## Claims

1. Thermal battery (1) comprising an enclosure comprising a fluid inlet and a fluid outlet and comprising, within it, a phase-change material encapsulated in the form of at least one tube (3), at least one tube (3) being spiral-wound within the enclosure,
**characterized in that** said spiral-winding of the tube (3) is performed around a winding axis (A) parallel to the flow of circulation of the fluid within said thermal battery (1) and comprises a central part (5) along the winding axis (A),
said central part (5) comprising longitudinal tubes (7) of encapsulated phase-change material.

2. Thermal battery (1) according to Claim 1,
**characterized in that** it comprises spacers between the tubes (3; 7) so as to form a space for circulation of the fluid.

3. Thermal battery (1) according to one of Claims 1 and 2, **characterized in that** the spiral-winding of the tube (3) is performed from a single tube (3).

4. Thermal battery (1) according to one of the preceding claims, **characterized in that** the walls of the tube (3) are produced in a plastic material.
